# EUROPEAN PATENT APPLICATION

(11) **EP 2 366 577 A2**
(43) Date of publication of application: **21.09.2011**
(21) Application number: 11170374.0
(22) Date of filing: 21.09.2009
(51) Int. Cl.: B60K 17/04, B60K 6/12, B60K 6/26, B60K 26/02

(54) **Transmission and control system for vehicles**

(30) Priority: 13.10.2008 CH 16182008
(62) Divisional of application: 09740757.1
(71) Applicant: Grieco, Leonardo, 21050 Saltrio (VA) (IT)
(72) Inventor: Grieco, Leonardo, 21050 Saltrio (VA) (IT)
(74) Representative: Zardi, Marco

(57) **Abstract**

A decentred transmission system for vehicles and in particular for motor vehicles, wherein the driving wheels comprise a crown (3) that extends over the inner circumference, and the motion is transmitted to each driving wheel through a pinion (4) engaged on said crown. Preferably, the transmission system comprises a clutch (105) that is normally open and a combined pedal (113) with the function of a clutch and accelerator through stroke sensors (A, B).

## Description

### Field of the invention

The invention concerns a transmission system for vehicles. In particular, the invention concerns a transmission system for motor vehicles, for example automobiles. The invention can be applied to two and four-wheeled vehicles, and it is advantageous both in light vehicles like for example automobiles, and in heavy vehicles.

### Prior art

In the prior art, the transmission system of a motor vehicle, and in particular of an automobile, always follows a predetermined set-up.

With reference, for the sake of simplicity, to an automobile with two driving wheels and rear wheel drive, the set-up is the following: the engine, through a clutch, drive a manual or automatic gearbox, which allows the transmission ratio to be varied; downstream of the gearbox there is a drive shaft and a differential gear; at the output of the differential gear there are two axles that connect the differential gear itself to the driving wheels. In front wheel drive vehicles the drive shaft is not necessary, but the set-up is substantially the same and foresees, in order: engine, gearbox, differential gear (if present), and driving wheels. It follows that the driving wheels are driven by a shaft or axle that rotates at the speed set by the gearbox and possibly by the rear-axle ratio at the differential gear.

In motorcycles the transmission is generally by chain or in some cases by cardan shaft, but it substantially follows the engine-gearbox-driving wheel set-up.

There is ever-increasing interest in trying to improve efficiency and particularly to reduce the fuel consumption of automobiles, both due to the known problems of pollution, and due to the high cost of fuel.

In recent years, various and numerous technical solutions have been proposed for this purpose, including boosting with a turbocompressor, especially for diesel engines, the adoption of increasingly complex power supply systems and, more recently, making hybrid vehicles moved by a thermal engine and by an electric motor, or else hydrogen-powered vehicles. Such solutions, however, are not entirely satisfactory particularly because they always involve greater cost and complication. Moreover, they have proven to only be applicable to certain types of vehicles, like for example medium-high class vehicles, whereas they are absolutely not applicable, for example, to commercial and/or heavy vehicles.

There are also vehicles moved just by an electric motor, but they are not widely used due to the limited autonomy and performance, and the costs that are too high.

With regard to the transmission, there is increasing use of automatic gearboxes. It is known that conventional automatic gearboxes, with torque converter, reduce efficiency and bring about a certain increase in consumption; consequently, there is increasing use of semiautomatic and continuously variable transmissions, which are however quite expensive and generally do not improve fuel consumption, apart from to a negligible extent, with respect to a manual gearbox. All transmission systems, both manual and automatic, still remain to the set-up that has been described above.

### Summary of the invention

The problem forming the basis of the invention is to provide a system that is simple in construction but adapted to improve efficiency, increase performance and reduce fuel-consumption of vehicles and automobiles.

The problem is solved with a control system for vehicles and a transmission system according to the claims.

An embodiment of the invention comprises a modification of the set-up of the transmission system, with respect to the known one which is common to substantially all vehicles currently produced. The idea consists of decentring the point of transmission of motion to the driving wheel, or to the driving wheels if there is more than one.

The vehicle comprises at least one driving wheel, and the transmission system comprises at least one pinion in decentred position with respect to said driving wheel, which transmits motion to a crown arranged on the inner circumference of said driving wheel.

In a preferred aspect of the invention, the system comprises a crown gear on the inner circumference of said driving wheel, and at least one motor pinion engaged on said crown gear.

The invention can be applied to vehicles of any kind, for example bicycles, motorcycles, automobiles and light or heavy vehicles. In vehicles having a plurality of driving wheels, each driving wheel is equipped with a crown gear on the inner diameter and with a respective actuation pinion.

In a preferred application to an automobile with two driving wheels, the transmission system according to the invention essentially comprises a gearshift, a differential gear, two axles at the output of the differential gear; each axle is fixedly connected to a pinion engaged with the inner crown gear of a respective driving wheel. Similarly, the invention can be applied in vehicles with four driving wheels, with a pinion-crown engagement for each wheel.

According to a further aspect of the invention, it is provided a system for boosting and/or recovering the kinetic energy during braking, actuated by at least one of the axles. In a preferred embodiment, said system comprises at least one air compressor, which accumulates compressed air in a suitable tank, and said compressed air is used to supercharge the engine. In another embodiment, the recovery system comprises an alternator that supplies electrical energy to a battery; said electrical energy can be used for the on-board accessories or for traction, also having an electric motor.

According to a further aspect of the invention, the braking system of the automobile, for example with brake discs directly associated with the axles, can be associated with the axles.

An advantage of the invention consists of the fact that the traction point is displaced from the centre of the driving wheels to the edge of the wheel itself, where the engagement between the pinion and the inner crown takes place. The applicant has found that such a displacement of the traction point is advantageous because it decreases the torque required for traction and it improves the efficiency of the transmission. Said change of the traction point increases the thrust that can be obtained for the same available power of the engine, with all the related advantages: possibility of adopting smaller and less polluting engines, for the same performance, greater possibilities of application for electric motors.

Another advantage is given by the fact that between the pinion and the crown inside the driving wheel there is a high reduction ratio, typically at least 10:1. It follows from this that simpler and less expensive gearshifts can be used, with 3 or 4 speeds only instead of the 5-6 speeds of current gearboxes.

Moreover, due to said reduction ratio, the axles rotate at a much higher speed than in the prior art; this promotes the recovery of kinetic energy in the ways that have been described above. In particular, in the prior art the axles of the wheels rotate at the same speed as the wheels, since they are downstream of the gearbox and of the differential gear; such a speed is generally insufficient to directly drive an air compressor or an alternator for energy recovery. Thanks to the invention, however, the axles rotate at a higher speed, of the order of 5000 revs/min for an average travel speed of the vehicle, since downstream there is the gear reduction ratio between pinion and crown gear, and they can usefully actuate a supercharger and/or energy recovery system like those mentioned above. The advantage is that an efficient energy recovery is obtained with relatively simple interventions on the mechanics, without modifying the engine or the upstream transmission members.

The higher speed of the axles also allows the axles themselves to be exploited more efficiently for braking. Indeed, vehicles are known with inboard disc brakes, i.e. mounted on the axles, but such a provision has up to now proven inefficient and has not been applied widely. Thanks to the invention, the required braking torque on the axles is smaller, due to their high speed, and therefore the braking can be more efficient and smaller and more effective brake discs and calipers can be used, for the same braking effect. By mounting the brake discs and relative calipers at the axles, instead of inside the wheels, the non-suspended masses are reduced, to the benefit of road handling.

A control system for motor vehicles according to the invention essentially comprises a normally open clutch, which can be combined with a conventional gearshift. In conventional vehicles a normally closed clutch is used, which opens by acting upon the control pedal. In the system of the invention, on the other hand, by releasing the control pedal the clutch stays open; by pressing the pedal a start-of-stroke sensor is activated that closes the clutch and mechanically connects the engine to the gearbox. A second sensor, activated by the stroke of the pedal itself, allows the accelerator to be controlled. Consequently, a control system with just two pedals is obtained. An advantage of the system is that the normally open clutch allows the kinetic energy to be better exploited and to reduce pollution and energy consumption. In the current system, indeed, during the release step the engine acts as a brake. In the system according to the invention, on the other hand, during the release of the combined clutch/accelerator pedal, as often occurs especially in city centres, the vehicle continues to run thanks to the fact that the clutch is normally open (NO).

The characteristics and advantages of the invention shall become clearer from the following detailed description and with the help of the attached figures.

### Brief description of the figures

Fig. 1 schematically shows a driving wheel of an automobile, actuated in accordance with an embodiment of the invention.
La Fig. 2 shows the transmission diagram of an automobile with a front-mounted engine and rear wheel drive, equipped with a transmission system made according to an embodiment of the invention.
La Fig. 3 shows the diagram of a control system for an automobile, according to a preferred embodiment.

### Detailed description of a preferred embodiment

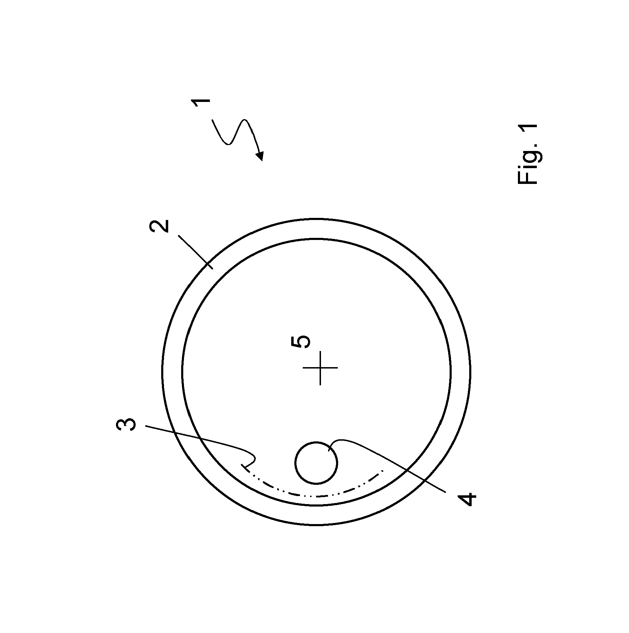

Fig. 1 schematically shows a driving wheel 1 of a motor vehicle, which mounts a tyre 2 on a suitable bearing carcass. The wheel 1 is equipped with a crown gear 3 that extends over the entire inner circumference of the wheel 1 itself, and is engaged by a motor pinion 4. Said pinion 4, when in use, is set in rotation by the engine of the vehicle, through a suitable transmission comprising, for example, a clutch and a gearshift. The wheel 1 is supported by a central axis or hub at the point indicated with 5.

For use in an automobile, the pinion 4 can have a diameter of about 35-40 mm. Considering that the wheel 1 has an external diameter of about 600 mm (including the tyre) and a diameter of the crown gear 3 of about 400 mm, this is equivalent to a transmission ratio of about 10:1 or 11:1. It can thus be seen that there is a high gear reduction ratio between pinion 4 and crown 3.

From Fig. 1 it can also be seen how, in the invention, the traction point is decentred, going from the axis through point 5, as occurs in the prior art, to the engagement point between pinion 4 and crown 3, which, on the other hand, is located near to the outer circumference of the wheel itself, in contact with the ground. The preferred positioning of the pinion is opposite the ground, at "twelve o'clock".

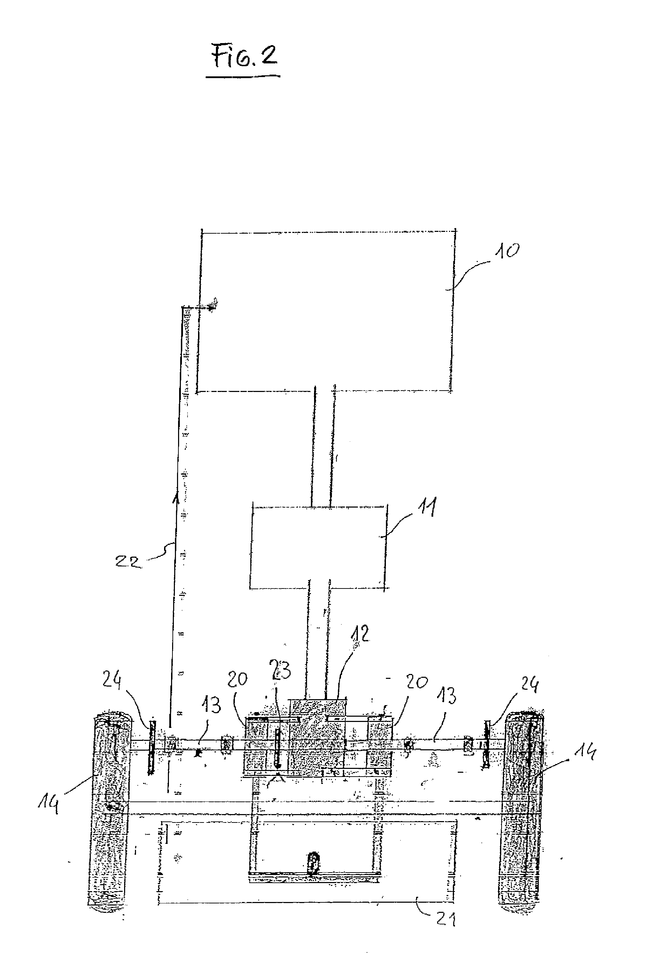

The diagram of a preferred application is shown in Fig. 2. An automobile with rear wheel drive comprises an internal combustion engine 10 and a transmission system comprising a gearbox 11 and a differential gear 12. Said differential gear 12 has two axles 13 which actuate the driving wheels 14, right and left respectively, through a pinion-crown coupling of the type in Fig. 1. In practice, each of the wheels 14 has an inner crown gear 3 engaged by a pinion 4 (Fig. 1), the latter being fixedly connected to the respective axle 13.

In accordance with further preferred aspects of the invention, the aforementioned axles 13 each actuate a compressor 20, which is preferably fitted directly onto the axle. The compressors 20 supply compressed air to a tank 21, and the compressed air, through a line 22, is used to boost the engine 10. The compressors 20 can be selectively connected in the release and/or braking step, for example with an automatic clutch, so as to recover the kinetic energy of the vehicle.

The described boosting system is more advantageous than known turbocompressors actuated by the exhaust gases, which as known suffer of delayed response and also do not allow energy recovery, but rather generally increase consumption.

A pulley 23 is also shown, fitted onto one of the axles, which can be used to actuate an alternator and supply electrical energy to the on-board systems or to a battery pack. Such a system can be foreseen in combination with, or as an alternative to, the air compressors 20, and it allows further recovery of kinetic energy during braking.

The vehicle can thus be equipped with a hybrid motorisation, which comprises the thermal engine 10 and a further electric motor (not shown); said electric motor is actuated by batteries charged through an alternator driven by the pulley 23.

The axles 13 also have *per se* known disc brakes 24 associated with them, for the braking of the wheels 14.

It all operates in the following way. During use, the engine 10, in the example an internal combustion engine running on petrol or diesel, drives the gearbox 11 and the differential gear 12. At the output of the differential gear 12, the axles 13 rotate at a speed that depends upon the operating speed of the engine and the gear engaged, but in any case higher than in conventional vehicles. Indeed, each of the axles 13 actuates the respective wheel 14 through a pinion that engages a crown gear inside the wheel, with an analogous coupling to that between pinion 4 and crown 3 of Fig. 1. The reduction ratio between axle 13 and wheel 14 is therefore of the order of 10:1 1 or even more.

The compressors 20 feed compressed air to the tank 21, and the compressed air through the pipe 22 is used to boost the engine 10, i.e. injected into the cylinders during the intake step. If present, the alternator 23 can be used to recover energy in the form of electrical energy, in particular during braking. If the vehicle is equipped with it, the electrical energy recovered during braking can then be used to feed an electric motor (hybrid drive).

It must be noted that the described transmission system is not limited to use with thermal engines, but it can also be advantageously used in electric vehicles. It can also be used in motorcycles as well as in heavy vehicles, like trucks and lorries.

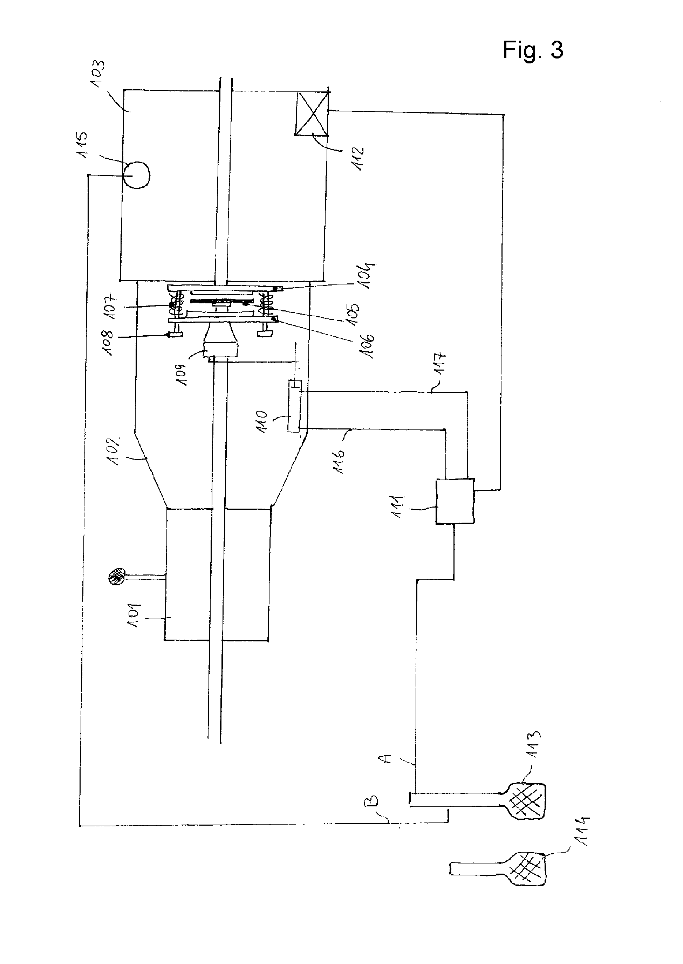

The control system of Fig. 3 is now described. The main components of the system are:
- 101: Gearshift
- 102: Bell
- 103: Engine
- 104: Flywheel
- 105: Clutch disc
- 106: Plate
- 107: Plate opening springs
- 108: Sliding plate attachment screws
- 109: Thrust bearing
- 110: Hydraulic cylinder
- 111: Hydraulic cylinder control valve
- 112: Hydraulic pump
- 113: Combined clutch/accelerator pedal
- 114: Brake pedal
- 115: Engine feed
- 116: Cylinder control 110
- 117: Cylinder control 110
- A: Valve opening contact 111

### B Accelerator contact

The control system is based substantially upon the two pedals 113 and 114. The pedal 113 acts both as clutch and as accelerator. When the pedal 113 is released, the clutch is opened through the effect of the springs 107 and the gearbox 101 is idle with respect to the engine 103. By actuating the pedal 113, the contact A makes the valve 111 open and feeds pressurised oil generated by the pump 112 to the hydraulic cylinder 110. The actuation of said hydraulic cylinder 110 counteracts the thrusting of the springs 107 and automatically closes the clutch 105. By pressing the combined pedal 113 further, the contact B controls the supply line 115 of the engine (e.g. flow of air and fuel), allowing the same pedal 113 to be used as accelerator. When the pedal is released, the engine goes back to the minimum operating speed; the valve 111 closes due to the lack of the contact A, and the clutch opens placing the vehicle in idle state.

An example of use is the following. While driving in the city centre, the engine can be kept at an operating speed of about 1000 revs/min with one gear always engaged, ideally 3rd gear. In order to set off from traffic lights, it is sufficient to press the combined pedal 113. By pressing for a few seconds and releasing, the automobile is taken to about 50-60 km/h with the engine at 1000 revs/min and in 3rd gear. The inventor, from practical tests, has found that an automobile with medium cylinder displacement, modified according to the invention, consumes about 1.8 litres of fuel for one hour of travel in or outside of the city (100-120 km/h). Atmospheric pollution is reduced, compared to the current system, thanks to the reduced fuel consumption. The absence of continuous gearshifting also reduces sound pollution.

## Claims

1. A control system for motor vehicles, said control system comprising a normally open clutch (105) with a first start-of-stroke sensor (A) and a second sensor (B), where: by releasing the control pedal of said clutch, the clutch stays open; by pressing said control pedal the start-of-stroke sensor (A) is activated and closes the clutch mechanically connecting the engine of the vehicle to a gearbox, said second sensor is activated by the stroke of said control pedal and allows the accelerator to be controlled.

2. Transmission system for a vehicle, the vehicle comprising at least one driving wheel (1), said transmission system comprising at least one driving pinion (4) in decentred position with respect to said driving wheel, which transmits the motion to a crown (3) arranged on the inner circumference of said driving wheel, **characterized by** a control system having at least:
- a motor (103);
- a gearshift (101);
- a clutch (105) that is normally open, between said motor and said gearbox;
- a combined pedal (113) with clutch and accelerator function;
and wherein said combined pedal, through a start-of-stroke contact (A), controls the closing of said clutch, and through a second contact (B) controls the revolution speed of the motor, operating as an accelerator.

3. Transmission system according to claim 2, said control system comprising two pedals (113 and 114), wherein a pedal (113) acts both as clutch and accelerator, and where: when said pedal (113) is released, the clutch is opened through the effect of springs (107) and the gearbox (101) is idle with respect to the engine; by actuating said pedal 113, the start-of-stroke contact (A) opens a valve (111) and feeds pressurised oil generated by a pump to a hydraulic cylinder (110); the actuation of said hydraulic cylinder counteracts the thrusting of said springs and automatically closes the clutch; by pressing the combined pedal further, said second contact (B) controls a fuel supply line (115) of the engine allowing the same pedal to be used as accelerator; when the pedal is released, the engine goes back to the minimum operating speed; said valve closes due to the lack of the contact, and the clutch opens placing the vehicle in idle state.

4. Vehicle, in particular a light or heavy motor vehicle, comprising at least one electric or thermal motor (10), and a transmission system according to any one of the previous claims.
